# EUROPEAN PATENT APPLICATION

(11) **EP 2 223 773 A1**
(43) Date of publication of application: **01.09.2010**
(21) Application number: 08862175.0
(22) Date of filing: 08.12.2008
(51) Int. Cl.: B23Q 17/22, B23D 45/06, B23D 47/04, B23B 5/24

(54) **A TABLE TOOL**

(30) Priority: 07.12.2007 CN 200710191228
(71) Applicant: Positec Power Tools (Suzhou) Co., Ltd., Suzhou Jiangsu 215006 (CN)
(72) Inventor: BROWN, Warren, Mount Evelyn Victoria 3796 (AU); GERHARDT, Graham, Warrandyte Victoria 3133 (AU); SZOMMER, Harry, Carrum Downs Victoria 3201 (AU)
(74) Representative: Stuttard, Garry Philip
(86) International application number: PCT/CN2008/073378
(87) International publication number: WO 2009/076875

(57) **Abstract**

A table tool comprises a base (2), a work table (3) on the base (2), a slot (6) defined through the work table, a saw blade (9) extending through the slot (6), and an optic indicating device (10) located beneath the work table (3) including at least one light emitter (102). The light beam of the light emitter (102) parallels to the plane of the saw blade. The optic indicating device can indicate the cutting position and the obliquity of the saw blade.

## Description

### Technical field

The present invention relates to a table saw, particularly relates to the table saw with an optical indicating device.

### Background

A conventional table saw can cut wood piece in a line by using a blade driving by a motor. The table saw is comprising a base, a work table disposed on the base, a blade extending through the work table. The blade is driven by a motor, and a riving knife is disposed under the work table and mounted on an adjusting mechanism, and the blade can tilt by operating the adjusting mechanism. A miter gauge is disposed on the worktable, operator can use the miter gauge guiding the workpiece in a pre-design angle. A guard is mounted above the blade, and that can prevent operator being hurt and dust splashing.

US. Pub. No. 20040261592 to Barry discloses a table saw, which riving knife is mounting a laser device, and the light emitted by the laser device is situated front the blade to indicate the position will be cut. Operator can cut workpiece by using the light guiding the workpiece.

The laser device is mounted on the riving knife, but the riving knife will be shake during cutting workpiece, and then the light maybe excursion, which lead a low quality of the workpiece. Otherwise, if operator put up the guard by mistake, the laser device may irradiate the eyes of the operator directly, which may hurt the operator.

Further, during cutting the workpiece, operator can not guide the workpiece without miter gauge, and that will very dangerous. So it is useless to fix the laser device on the riving knife without changing the operating method of the fence or the miter gauge.

US. Pat. No. 6,263,584 to Barry discloses a table saw with a detachable laser device. The light of the laser device can work with a protractor to indicate the bevel angle of the blade, and then before startup the table saw remove the laser device, and the blade can cut the workpiece with the pre-design angle.

But this table saw need to mount and remove the laser device during cutting workpieces with different angle, and need working with a protractor, and that is inconvenience.

### Summary

One object of present invention is to provide a table saw with an optical indicating device which can be more stabile and convenience.

Another object of present invention is to provide a table saw with an optical indicating device which can precisely indicate the blades' cutting position and bevel angle. According to the objects aforementioned, the present invention provides a table saw comprising: a base, a work table disposed on the base, a slot defined on the work table, a blade extending through the slot, wherein an optical indicating device is disposed below the work table, the optical indicating device comprises at least one light generator, the light generator emitting a light beam parallel with the plane of the blade.

The present invention further provides the light generator is a LED.

The present invention further provides the light generator is a laser diode.

The present invention further provides the optical indicating device comprises a mounting base, the light generator disposed on the mounting base, the light generator is electrically connected with a power supply.

The present invention further provides the power supply is a cell.

The present invention further provides the optical indicating device is moved with the blade.

The present invention further provides the work table comprises an indicating section, the light beam is projected onto the indicating section forming a line indicating the cut position of the blade.

The present invention further provides the indicating section is made of translucent material.

The present invention further provides the blade has a width, the light beam is located within interior of the width of the blade.

The present invention further provides the blade has a width, the light beam is located on outside of the width of the blade, the width has left side edge and right side edge, the light beam is aligned with the left side edge or the right side edge.

The present invention further provides a scale is mounted on the base, the light beam is projected onto the scale forming a line indicating the bevel angle of the blade.

The present invention further provides the scale is made of translucent material.

The present invention further provides the scale is curve shaped.

The present invention further provides the work table comprises an indicating section, a scale mounted on the base, the optical indicating device has a first light generator and a second light generator, the first light generator emits a light, and at least a portion of the light projects onto the indicating section and forming a first line, indicating the cut position of the blade, and at least a portion of the light projects onto the scale and forming a second line, indicating the bevel angle of the blade.

The present invention further provides a second light generator emits a light projecting onto the indicating section and forming a third line, indicating the cut position of the blade.

The present invention further provides the blade has a width, the width has a left side edge and a right side edge, the first line is aligned with the right side edge of the width, the third line is aligned with the left side edge of the width.

The present invention further provides the table saw comprises a rod connected on the lower surface of the work table, a bevel seat pivotally connected on the rod, a bracket pivotally connected on the pivot seat.

The present invention further provides the optical indicating device is disposed on the bevel seat.

The present invention further provides the optical indicating device is disposed on the bracket.

### BRIEF DESCRIPTION OF THE DRAWINGS

FIG. 1 is a perspective view of the present invention, in which the bevel angle is 0°;
FIG. 2 is a perspective view of the table saw shown in FIG 1, in which the bevel angle is 20°;
FIG. 3 is a cross sectional view of the table saw shown in FIG 1;
FIG. 4 is a perspective view of part assembly of the table saw shown in FIG 1;
FIG. 5 is a perspective view of part assembly of the table saw shown in FIG 1;
FIG. 6 is a sketch view of the blade aligned to the indicating line, in which the indicating line is within the range of blades' width, and aligned with the left side edge of the width;
FIG. 7 is a sketch view of the blade aligned to the indicating line, in which the indicating line is within the range of blades' width, and aligned with the right side edge of the width;
FIG. 8 is a sketch view of the blade aligned to the indicating line, in which the indicating line is outside the range of blades' width, and aligned with the left side edge of the width;
FIG. 9 is a sketch view of the blade aligned to the indicating line, in which the indicating line is outside the range of blades' width, and aligned with the right side edge of the width;
FIG. 10 is a perspective view that the indicating line of a workpiece aligned to the indicating line of the blade;
FIG. 11 is a perspective view of part assembly of present invention, in which the optical indicating device has two light generators;
FIG. 12 is a perspective view of part assembly of present invention, in which the blade has only one the indicating line;
FIG. 13 is a perspective view of part assembly of present invention, in which the optical indicating device have two light generators;
FIG. 14 is a perspective view of part assembly of present invention, in which the blade has two indicating lines.

### DETAILED DESCRIPTION

A table saw is the preferred embodiment of the present invention.

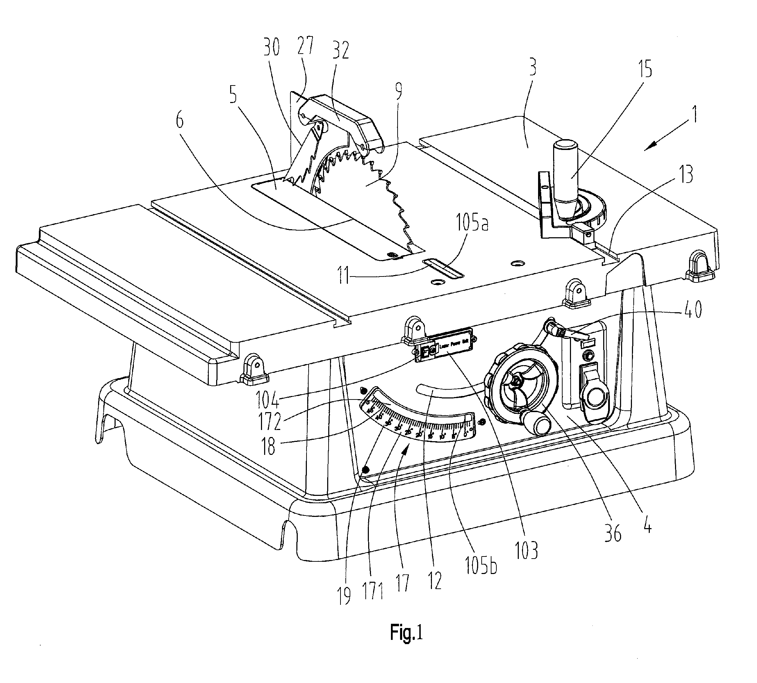

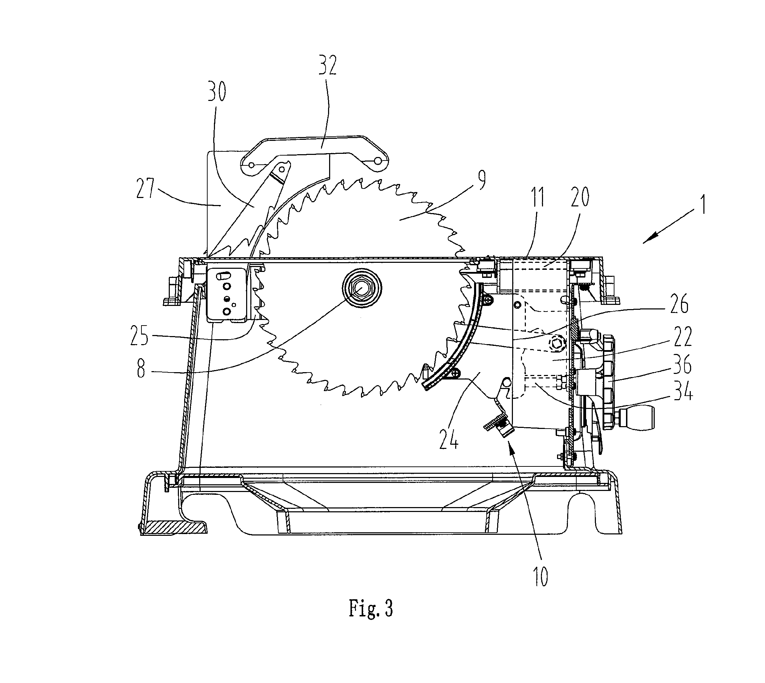

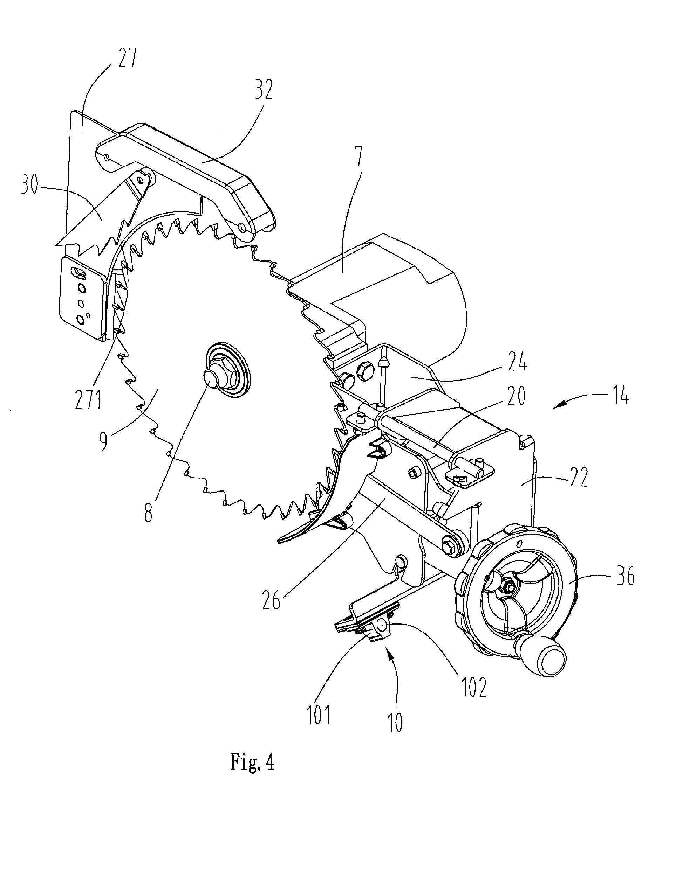

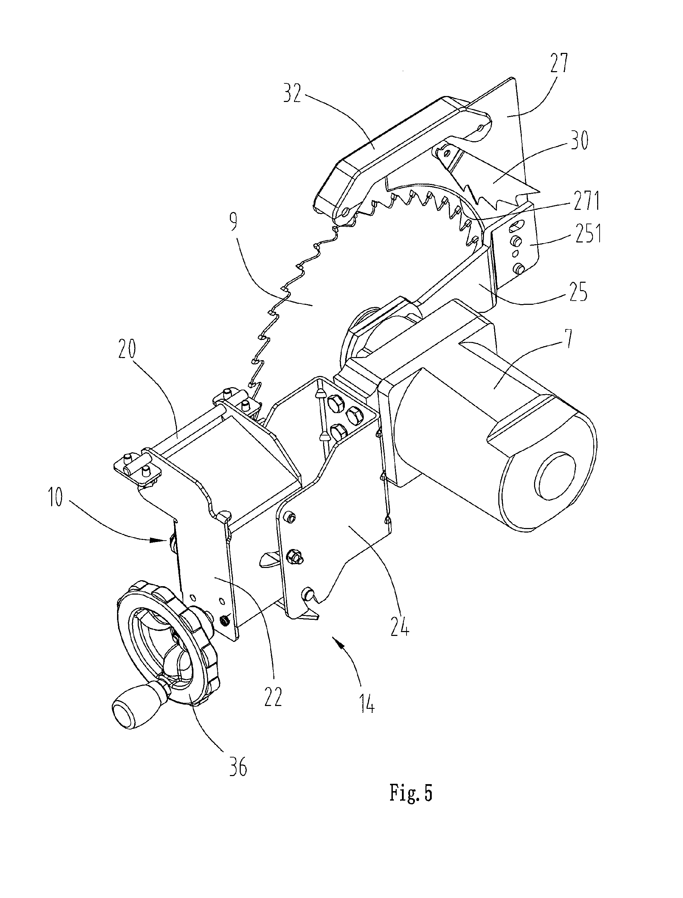

As shown in FIG. 1 to 5, a table saw 1, comprising a base 2, a work table 3 connected on the base 2, a cutter protection board 5 fixed on the work table 3, a slot 6 set on the cutter protection board 5, wherein the round 9 driven by the motor 7 passes through the slot 6.

A translucent indicating section 11 lying in front of the cutter protection board 5 is mounted on the work table 3, wherein the indicating section 11 can be made of translucent plastics or any other translucent materials. A guide channel 13 for installing planar angle gauge 15 is configured in the upper surface of the work table 3. A scale 17 is set on the base 2, and the scale 17 is preferably curve. The scale 17 is made of translucent plastics or any other translucent materials.

The scale 17 has a marking section 171 and a non-marking section 172, wherein the back of the marking section 171 is printed with graduated line 18 and graduation value 19. Except the part printed with graduated line 18, the other parts of the marking section 171 are all treated for opacity, so light beams can permeate through the graduated line 18 and the non-marking section 172 only, which clearly shows the indicating scale.

An adjusting mechanism 14 is mounted below the work table 3, wherein the adjusting mechanism 14 includes a bevel seat 22 and a bracket 24.

A rod 20 is fixed on the lower surface of the work table 3 along the longitudinal direction of the work table 3. The bevel seat 22 is pivotally connected on the rod 20. The bracket 24 is rotatably connected onto the bevel seat 22.

The motor 7 is fixed on the bracket 24. The blade 9 is fastened on the output shaft 8 of the motor. A shaft sleeve is set near the blade 9 on the motor 7. The first connecting piece 25 is pivotally connected onto the shaft sleeve.

The first connecting piece 25 can also be pivotally connected onto the output shaft 8 of the motor.

The second connecting piece 26 is a long rectangular board body whose one end is pivotally connected with the first connecting piece 25 through pins and the other end is pivotally connected with the bevel seat 22 via pins.

One end of the first connecting piece 25 is bent to form a side plate 251 on which a riving knife 27 is fixedly linked. The riving knife 27 is a sheet with a cutting part 271 which keeps certain clearance away from the edge of the blade 9. A pawl 30 and hood supporting arm 32 are pivotally coupled on the riving knife 27. The riving knife 27, pawl 30 and hood supporting arm 32 can go up and down together with the blade 9 through the first connecting piece 25 and the second connecting piece 26.

The base 2 has a panel 4 on which a curved slot 12 is set. The exterior part of the handwheel shaft 34 rotatably mounted on the bevel seat 22 passes through the slot 12, wherein a handwheel 36 is detachably installed on the exterior part of the handwheel shaft 34 and the handwheel 36 is exposed outside the panel 4 for convenient operation.

An optical indicating device 10 is fixedly configured on the bevel seat 22. It is known to those skilled in this art that the optical indicating device 10 can be also set on the bracket 24.

The optical indicating device 10 comprises a mounting base 101 fixedly mounted on the bevel seat 22, a light generator 102 set on the mounting base 101, wherein the light generator 102 is electrically connected with the power supply 103. A switch 104 which is used to connect or disconnect the power supply 103 is set on the power supply 103. Preferably, the power supply 103 is a cell. According to those killed in this art, the power supply 103 can be either a permanent magnet generator or a transformer. It is known to those skilled in this art the optical indicating device 10 further consists of an adjusting piece used to adjust the light generator 102, the angle of light beam emitted by the light generator 102 and the parallelism of the light beam with the plane of the blade 9. No more details are given herein.

The light generator 102 can select either an LED or a laser diode as the light source. The light generator 102 taking laser diode as light source has better concentrated energy and clearer light beam emitted.

The LED can be one of single-color, dual-color and RGB full-color LEDs, wherein the dual-color and RGB full-color LEDs together with the control circuit form the light generator. To make the light beam emitted clearer, the colors with higher contrast between the indicating section 11 and scale 17 such as white, blue or red can be chosen, namely, the light generator 102 can select the LED with corresponding color to give off corresponding single color. With dual-color LED, different single colors can be emitted according to actual need through the control circuit. If RGB full-color LED is selected, not only different single colors of R, G and B can be given off as desired, but also the light beam of any color can be emitted under the control of the three primary colors of R, G and B. LED is non-irritant to people's eyes, safer in use and lower in cost.

The light generator 102 can also select LED as light source, which generate planar light beam through the conversion of the combination of lenses. This structure can realize more concentrated LED light and clearer light beam.

The light beam emitted by the light generator 102 is parallel to the plane of the blade 9. The optical indicating device 10 is moved together with the blade 9, namely the optical indicating device 10 and blade 9 make simultaneous deflection movement.

The switch 104 is turned on to connect the power supply 103, then the light generator 102 will emit a light beam. One part of the light beam is projected to the indicating section 11 of the work table 3 to form an indicating line 105a which is used to indicate the cutting location of the blade 9. One part of the light beam is projected to the scale 17 to form an indicating line 105b which is used to indicate the bevel angle of the blade 9.

The indicating section 11 and the scale 17 are both made of translucent materials, and the light beam can be projected onto the indicating section 11 and the scale 17 to form very clear indicating lines 105a, 105b without any disclosure. Therefore, the light beam may not illuminate the operator's eyes and have no any harm to the operator. The blade 9 has a width W which is provided with a left side edge and a right side edge.

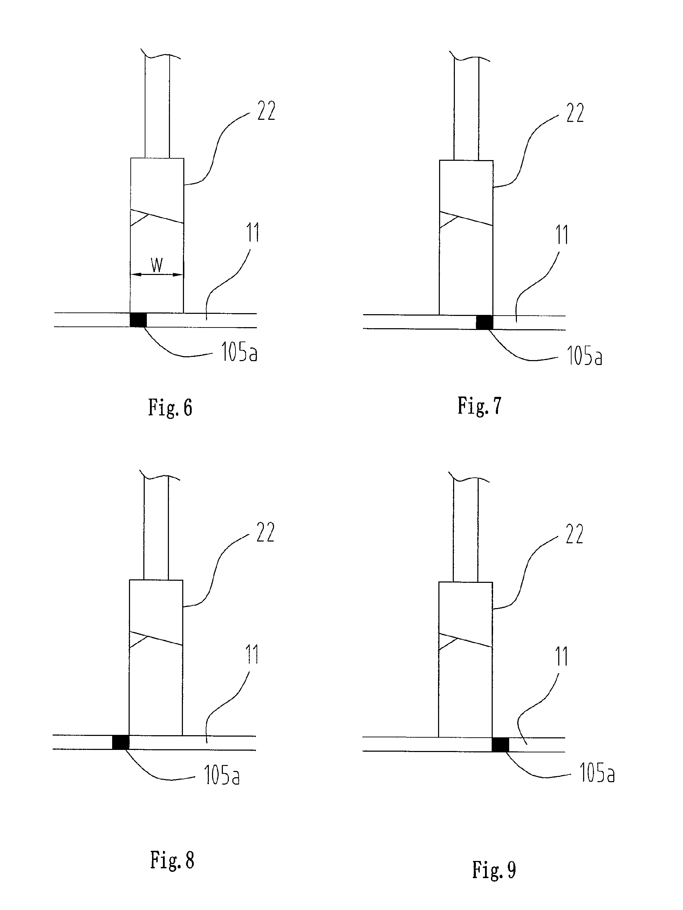

As shown in FIG. 6, the indicating line 105a is located within the range of the width W of the blade 9 and aligned with the left side edge of the width W. As shown in FIG. 7, the indicating line 105a is located within the range of the width W of the blade 9 and aligned with the right side edge of the width W.

As shown in FIG. 8, the indicating line 105a is located outside the range of the width W of the blade 9 and aligned with the left side edge of the width W. As shown in FIG. 9, the indicating line 105a is located outside the range of the width W of the blade 9 and aligned with the right side edge of the width W.

It is known to those skilled in this art, the indicating line 105a can be either aligned with the central plane of the blade 9 or aligned with any location within the range of the width W of the blade 9.

Since the part of light beam emitted by the light generator 102 is projected to the scale 17 to form an indicating line 105b, the width of the indicating lines 105a, 105b are preferably the same as that of the graduated line 18.

For different alignment locations of indicating line 105a with blade 9, the installation location of the scale 17 can be adjusted. Therefore, the scale 17 can be set to slide long the panel 4. Moreover, according to different alignment locations of indicating line 105a with blade 9, different indicating structures for installation locations are set. For example, the concave part is set on panel 4 for different installation locations, convex part engaged with the concave part is set on the scale 17, or other fitting modes known in this field may be adopted. More details are not given herein. Preferably, the scale 17 is fixed onto the panel 4, the indicating line 105a is aligned with the blade 9 in one of the ways shown in FIG. 6 to 7 so that is the operator can easily operate.

It is known to those skilled in this art that the light generator 102 can generate two light beams in parallel through the conversion of the combination of lenses, wherein the two light beams are parallel to the plane of the blade 9, part of one light beam is projected onto the indicating section 11 to form the first indicating line which is aligned with the right side edge of the width W of the blade 9 and indicates the cutting location of the blade 9, part is projected onto the scale 17 to form the second indicating line which indicates the bevel angle of the blade 9; the other light beam is projected onto the indicating section 11 to form the third indicating line which is aligned with the left side edge of the width W of the blade 9 and indicates the cutting location of the blade 9.

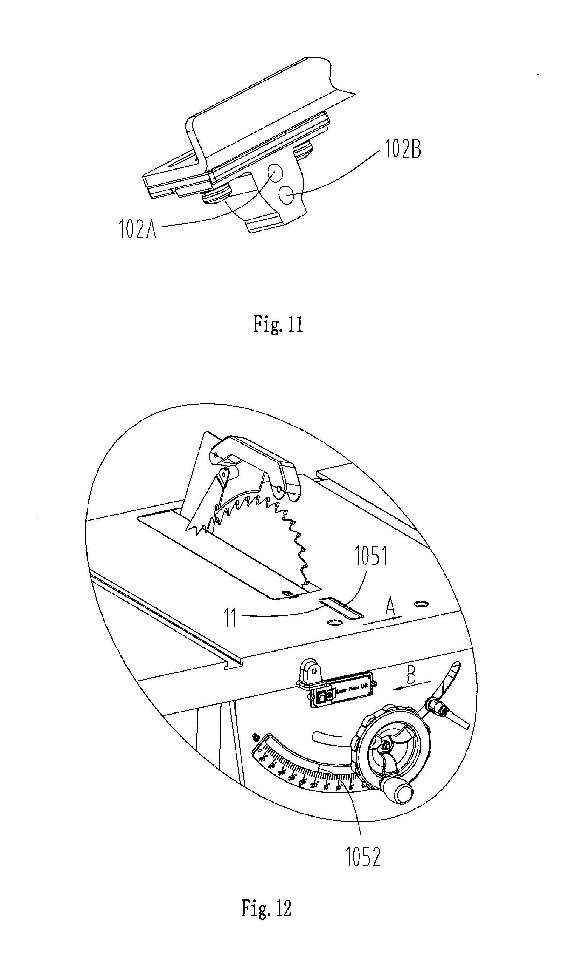

As shown in FIG. 11 to 14, the optical indicating device 10 of the present invention can also include two light generators 102A, 102B, wherein the light beams emitted by the two light generators 102A, 102B are parallel to the plane of the blade 9.

As shown in FIG. 11 and 12, when the light beams emitted by the two light generators 102A, 102B are on the same plane, the light beam given off by the first light generator 102A is projected onto the indicating section 11 to form the first indicating line 1051 which indicates the cutting location of the blade 9, the light beam given off by the second light generator 102B is projected onto the scale 17 to form the second indicating line 1052 which indicates the bevel angle of the blade 9. The light beams emitted by the two light generators 102A, 102B can be partly projected onto the indicating section 11 and partly projected onto the scale 17.

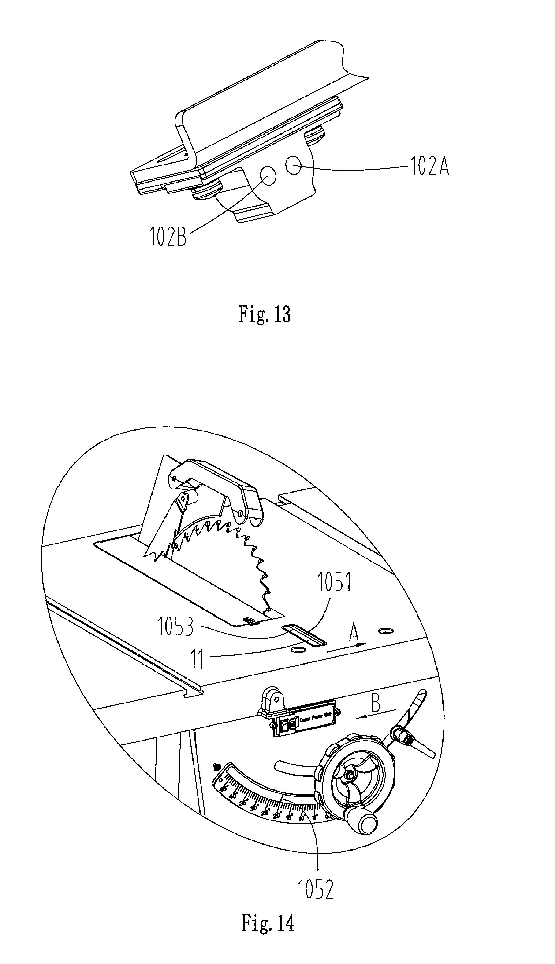

As shown in the FIG. 13 and 14, when the light beams emitted by the two light generators 102A, 102B are not on the same plane, part of the light beam given off by the first light generator 102A is projected onto the indicating section 11 to form the first indicating line 1051 which is aligned with the right side edge of the width W of blade 9, part of the light beam given off by the first light generator 102A is projected onto scale 17 to form the second indicating line 1052 which indicates the bevel angle of the blade 9; the light beam emitted by the second light generator 102B is projected onto the indicating section 11 to form the third indicating line 1053 which is aligned with the left side edge of the width W of the blade 9.

The optical indicating device 10 can also include more light generators. More details are not given herein.

As shown in FIG. 1 to 9, in transverse workpiece sawing state, turn on the switch 104 to connect the power supply 103, the light generator 102 then gives off light beam, push the handwheel 36 forward to drive the adjusting mechanism 14 to swing around the rod 20, the swinging of the adjusting mechanism 14 drives the motor 7, blade 9, riving knife 27, pawl 30 and hood supporting arm 32 to swing in the same direction simultaneously, namely, the optical indicating device 10 is moved together with the blade 9, until the indicating line 105b aims at the graduated line of 0 degree on the scale 17, as shown in FIG. 1, at this time, the bevel angle of the blade 9 is 0 degree, namely, the included angle between the plane of the blade 9 and that of the work table 3 is 90 degrees and the indicating line 105a is in the first location.

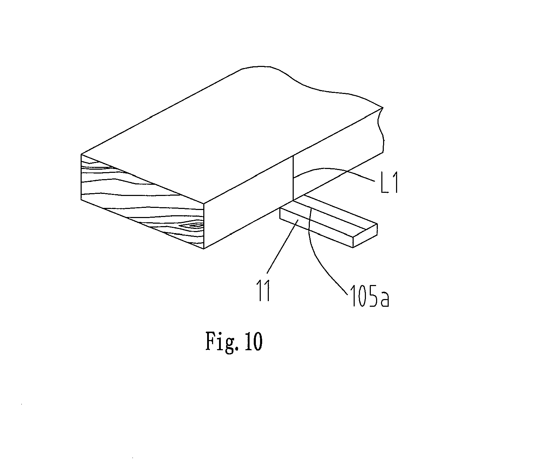

A locking wrench 40 is used to lock the adjusting mechanism relative to the work table 3. When sawing a workpiece, the operator puts the workpiece to be processed on the work table 3 and guides orientation by means of a planar angle gauge 15, further details are as shown in FIG. 10. Mark an indicating line L1 on the workpiece to be pressed with a pencil, confirm the location for sawing, push the planar angle gauge 15 so that the indicating line L1 is aligned with the indicating line 105a, at this time the blade 9 is also aligned with the indicating line L1. Start the table saw 1, push the planar angle gauge 15 so as to drive the workpiece to be processed to move along the direction aiming at the blade 9, saw the workpiece to be processed to the scheduled bevel angle, afterwards, start the switch 104 to disconnect the power supply 103.

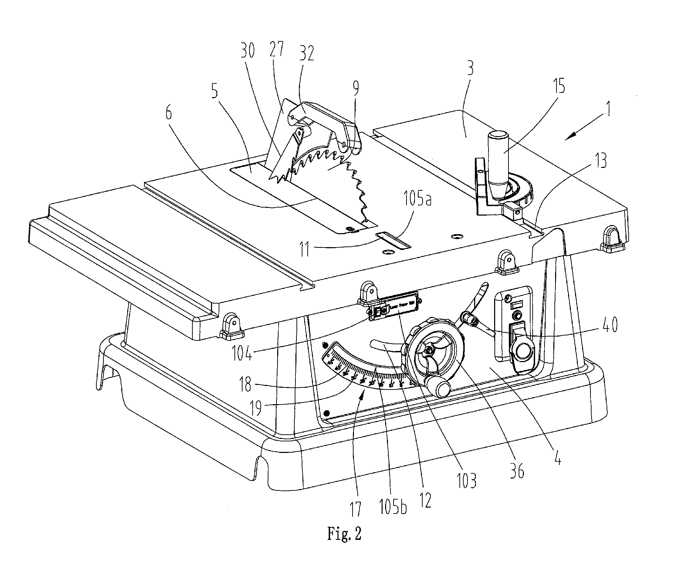

When it is required to saw the work piece to be processed into an inclination angle of 20 degrees, the operator shall push the handwheel 36 along the direction indicated by B as shown in FIG. 1 to drive the adjusting mechanism 14 to swing around the rod 20 until the indicating line 105b aims at the graduated line of 20 degrees on the scale 17, as shown in FIG. 2, the indicating line 105a is deflected to the second location. At this time, the bevel angle of the blade 9 bevel angle is 20 degrees, namely, the included angle between the plane of the blade 9 and that of the work table 3 is 70 degrees.

A locking wrench 40 is used to lock the adjusting mechanism 14 relative to the work table 3. When sawing a workpiece, the operator puts the workpiece to be processed on the work table 3 and guides orientation by means of a planar angle gauge 15. Mark an indicating line L1 on the workpiece to be pressed with a pencil, confirm the location for sawing, push the planar angle gauge 15 so that the indicating line is aligned with the indicating line 105a, at this time the blade 9 is also aligned with the indicating line. Start the table saw 1, push the planar angle gauge 15 so as to drive the workpiece to be processed to move along the direction of the bevel angle of the blade 9, saw the workpiece to be processed to the scheduled inclination angle, afterwards, start the switch 104 to disconnect the power supply 103.

By means of the planar angle gauge 15 and optical indicating device 10, the operator can saw the workpiece to be processed into the scheduled inclination angle or bevel angle for convenient operation.

Since the optical indicating device 10 is fixedly installed onto the bevel seat 22 and can swing with the swinging of the adjusting mechanism 14, motor 7 and bevel angle of the blade 9, the light beam emitted by the optical indicating device 10 keeps parallel to the plane of the blade 9 and accurately indicates the sawing direction and the bevel angle of the blade. Moreover, with the beam, the graduation value can be easily observed unlike regular graduation indication which is prone to generate visual error, thus improving the processing quality of workpiece and avoiding waste.

When keeping changing the workpiece sawing angle, the optical indicating device 10 does not need to be detached repeatedly, so the operator can conveniently use the tool and can greatly improve working efficiency.

For longitudinal sawing requirement, the operator can also easily saw the workpiece to be process into the scheduled inclination angle by means of the guardrail and the optical indicating device 10.

## Claims

1. A table saw, comprising:
a base,
a work table disposed on the base,
a slot defined on the work table,
a blade extending through the slot,
an optical indicating device disposed below the work table, the optical indicating device comprising at least one light generator, the light generator emitting a light beam parallel with the plane of the blade.

2. A table saw as claimed in claim 1, wherein the light generator is a LED.

3. A table saw as claimed in claim 1, wherein the light generator is a laser diode.

4. A table saw as claimed in claim 1, wherein the optical indicating device comprises a mounting base, the light generator disposed on the mounting base, the light generator is electrically connected with a power supply.

5. A table saw as claimed in claim 4, wherein the power supply is a cell.

6. A table saw as claimed in claim 1, wherein the optical indicating device is moved with the blade.

7. A table saw as claimed in claim 1, wherein the work table comprises an indicating section, the light beam is projected onto the indicating section forming a line indicating the cut position of the blade.

8. A table saw as claimed in claim 7, wherein the indicating section is made of translucent material.

9. A table saw as claimed in claim 7, wherein the blade has a width, the light beam is located within interior of the width of the blade.

10. A table saw as claimed in claim 7, wherein the blade has a width, the light beam is located on outside of the width of the blade, the width has left side edge and right side edge, the light beam is aligned with the left side edge or the right side edge.

11. A table saw as claimed in claim 1, wherein a scale is mounted on the base, the light beam is projected onto the scale forming a line indicating the bevel angle of the blade.

12. A table saw as claimed in claim 11, wherein the scale is made of translucent material.

13. A table saw as claimed in claim 11, wherein the scale is curve shaped.

14. A table saw as claimed in claim 1, wherein the work table comprises an indicating section, a scale mounted on the base, the optical indicating device has a first light generator and a second light generator, the first light generator emits a light, and at least a portion of the light projects onto the indicating section and forming a first line, indicating the cut position of the blade, and at least a portion of the light projects onto the scale and forming a second line, indicating the bevel angle of the blade.

15. A table saw as claimed in claim 14, wherein a second light generator emits a light projecting onto the indicating section and forming a third line, indicating the cut position of the blade.

16. A table saw as claimed in claim 15, wherein the blade has a width, the width has a left side edge and a right side edge, the first line is aligned with the right side edge of the width, the third line is aligned with the left side edge of the width.

17. A table saw as claimed in claim 1, wherein the table saw comprises a rod connected on the lower surface of the work table, a bevel seat pivotally connected on the rod, a bracket pivotally connected on the pivot seat.

18. A table saw as claimed in claim 17, wherein the optical indicating device is disposed on the bevel seat.

19. A table saw as claimed in claim 17, wherein the optical indicating device is disposed on the bracket.
